# EUROPÄISCHE PATENTANMELDUNG

(11) **EP 4 737 136 A1**
(43) Veröffentlichungstag der Anmeldung: **06.05.2026**
(21) Anmeldenummer: 25206817.6
(22) Anmeldetag: 06.10.2025
(51) Int. Cl.: B60C 11/03, B60C 11/00

(54) **FAHRZEUGLUFTREIFEN**

(30) Priorität: 04.11.2024 DE 102024210543
(71) Anmelder: Continental Reifen Deutschland GmbH, 30175 Hannover (DE)
(72) Erfinder: Plückers, Matthias, 30175 Hannover (DE); Kotlarski, Maria, 30175 Hannover (DE)
(74) Vertreter: Continental Corporation

(57) **Zusammenfassung**

Die Erfindung betrifft einen Fahrzeugluftreifen (1) für ein Nutzfahrzeug, umfassend einen Laufstreifen (2) mit wenigstens einer in Umfangsrichtung verlaufenden Umfangsrille (5), die den Laufstreifen (2) in wenigstens zwei Umfangsrippen (10) gliedert, wobei eine parallel zur Laufstreifenperipherie (9) im Laufstreifen (2) verlaufende, einen Gürtelverband (4) von radial außen berührende erste Einhüllende gemeinsam mit der Laufstreifenperipherie (9) sowie schulterseitigen Flankenabschnitten (6) ein Laufstreifen-Bruttovolumen definiert, wobei sämtliche Rillen (5) im Laufstreifen (2) ein Rillenvolumen definieren, wobei das Rillenvolumen im Laufstreifen (2) zwischen 1% und 10% des Laufstreifen-Bruttovolumens beträgt, wobei der Laufstreifen (2) mindestens zweischichtig ausgebildet ist, aufweisend eine radial innere erste Kautschuklage (2a) aus einer ersten Kautschukmischung und eine radial äußere zweite Kautschuklage (2b) aus einer zur ersten Kautschukmischung unterschiedlichen zweiten Kautschukmischung, und wobei ein Volumen der ersten Kautschuklage (2a) mindestens 20% und höchstens 60% eines Gesamtvolumens des Laufstreifens (2) beträgt.

## Beschreibung

Die Erfindung betrifft einen Fahrzeugluftreifen für ein Nutzfahrzeug, umfassend einen Laufstreifen mit wenigstens einer in Umfangsrichtung verlaufenden Umfangsrille, die den Laufstreifen in wenigstens zwei Umfangsrippen gliedert. Eine parallel zur Laufstreifenperipherie im Laufstreifen verlaufende, einen Gürtelverband von radial außen berührende erste Einhüllende definiert gemeinsam mit der Laufstreifenperipherie sowie schulterseitigen Flankenabschnitten ein Laufstreifen-Bruttovolumen. Sämtliche Rillen im Laufstreifen definieren zudem ein Rillenvolumen.

Aus der EP 2 292 448 A1 geht ein Fahrzeugluftreifen für Nutzfahrzeuge mit einem Laufstreifen mit zumindest zwei in Umfangsrichtung verlaufenden Umfangsrillen hervor, welche den Laufstreifen in Umfangsrippen unterteilen. Eine parallel zur Laufstreifenperipherie im Laufstreifen verlaufende, die tiefste(n) Umfangsrille(n) von radial innen berührende Einhüllende definiert gemeinsam mit der Laufstreifenperipherie und schulterseitigen Flankenabschnitten ein Laufstreifen-Bruttovolumen. Außerdem definieren sämtliche Rillen im Laufstreifen ein Rillenvolumen. Das Rillenvolumen im Laufstreifen beträgt zwischen 1% und 10% des Laufstreifen-Bruttovolumens.

Mit der Elektrifizierung von Nutzfahrzeugen steigen die Anforderungen an den Rollwiderstand von Fahrzeugluftreifen, insbesondere für elektrisch angetriebene Nutzfahrzeuge, stetig.

Die Aufgabe der vorliegenden Erfindung besteht darin, einen Fahrzeugluftreifen für ein Nutzfahrzeug mit einem verbesserten Rollwiderstand bereitzustellen. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugluftreifen für ein Nutzfahrzeug umfasst einen Laufstreifen mit wenigstens einer in Umfangsrichtung verlaufenden Umfangsrille, die den Laufstreifen in wenigstens zwei Umfangsrippen gliedert, wobei eine parallel zur Laufstreifenperipherie im Laufstreifen verlaufende, einen Gürtelverband von radial außen berührende erste Einhüllende gemeinsam mit der Laufstreifenperipherie sowie schulterseitigen Flankenabschnitten ein Laufstreifen-Bruttovolumen definiert, wobei sämtliche Rillen im Laufstreifen ein Rillenvolumen definieren, wobei das Rillenvolumen vorzugsweise maximal 10% des Bruttovolumens des Laufstreifens beträgt, wobei der Laufstreifen mindestens zweischichtig ausgebildet ist, aufweisend eine radial innere erste Kautschuklage aus einer ersten Kautschukmischung und eine radial äußere zweite Kautschuklage aus einer zur ersten Kautschukmischung unterschiedlichen zweiten Kautschukmischung, und wobei ein Volumen der ersten Kautschuklage mindestens 20% und höchstens 60%, bevorzugt mindestens 25% und höchstens 45%, besonders bevorzugt mindestens 30% und höchstens 40%, eines Gesamtvolumens des Laufstreifens beträgt. Anders gesagt bestehen 20% bis 60%, vorzugsweise, 25% bis 45%, bevorzugt 30% bis 40%, des Gesamtvolumens des Laufstreifens aus dem ersten Kautschukmaterial und entsprechend 80% bis 40%, vorzugsweise, 75% bis 55%, bevorzugt 70% bis 60%, des Gesamtvolumens des Laufstreifens aus dem zweiten Kautschukmaterial. Das Gesamtvolumen des Laufstreifens entspricht dem Brutto-Laufstreifenvolumen abzüglich des Rillenvolumens. Das Gesamtvolumen des Laufstreifens ist also als Laufstreifen-Nettovolumen zu verstehen, wobei jedoch weder weitere ästhetische, insbesondere Design bedingte, zusätzliche Volumen des Laufstreifens noch andere kleinere Nebenrillen, die nicht zur Funktion des Laufstreifens beitragen, vom Gesamtvolumen des Laufstreifens mitumfasst sind.

Für die Erfindung ist eine Kombination aus einer Erhöhung des Gummivolumens im Laufstreifen mit einer Erhöhung des Volumenanteils des ersten Kautschukmaterials am Gesamtvolumen des Laufstreifens wesentlich. In Kombination mit dem sogenannten Low Void-Profilmuster, also dem Profil mit geringem Rillenvolumenanteil, an der zweiten Kautschuklage ("cap") wird zusätzlich der Volumenanteil der ersten Kautschukmischung der ersten Kautschuklage ("base") am Gesamtkautschukbedarf erhöht. Der Volumenanteil des Materials der ersten Kautschukmischung ist im Vergleich zu herkömmlichen Fahrzeugluftreifen deutlich höher, sodass auch dessen Wirkung verstärkt wird. Die erste Kautschukmischung ist dabei eine rollwiderstandsoptimierten Mischung. Die beiden Technologien verstärken sich gegenseitig und liefern so einen stark verbesserten Rollwiderstand. Aufgrund des verbesserten Rollwiderstandes eignet sich der Fahrzeugluftreifen besonders für Nutzfahrzeugreifen, insbesondere für Elektrofahrzeuge.

Der Laufstreifen besteht aus mindestens zwei Komponenten mit unterschiedlichen Gummimischungen bzw. -zusammensetzungen, die jeweils an die Anforderungen in dem jeweiligen Bereich angepasst sind. Der Laufstreifen ist ein Multikomponenten-Laufstreifen, dessen Abschnitte bzw. Teile verschiedene Eigenschaften aufweisen und Funktionen realisieren. Die erste Kautschuklage ist als Base-Bereich des Laufstreifens zu verstehen. Die zweite Kautschuklage ist als die Straßenkontaktfläche bildender Cap-Bereich des Laufstreifens zu verstehen, wobei der Base-Bereich radial zwischen dem Cap-Bereich und dem Gürtelverband angeordnet ist. Der Cap-Bereich ist widerstandsfähig gegen Abrieb und sorgt für Traktion. Der Cap-Bereich weist ein Profilmuster auf, das aufgrund des geringen Rillenvolumens auch als Low Void-Profilmuster bezeichnet wird. Radial innerhalb der als "high volume base" ausgebildeten ersten Kautschuklage befindet sich der Gürtelverband, der somit radial zwischen der ersten Kautschuklage und einer Karkasse angeordnet ist. Radial zwischen dem Gürtelverband und der ersten Kautschuklage bzw. dem Base-Bereich kann eine weitere, insbesondere dünne, Gummischicht angeordnet sein, die "recoat" oder Unterplatte genannt wird. Diese Schicht kann als Klebeschicht für den Laufstreifen fungieren.

Bei einem Rillenvolumen von bis zu 10% des Laufstreifen-Bruttovolumens erhöht sich die Profilsteifigkeit in radialer Richtung derart, dass die Deformationsamplitude des Laufstreifens in einem Ausmaß reduziert wird, welches eine Überkompensation des zu erwartenden Effektes, nämlich einer Verschlechterung des Rollwiderstandes durch mehr vorhandenen Gummi, bewirkt. Der Rollwiderstand des Reifens ist somit geringer, wobei die gegenüber einem nach dem Stand der Technik ausgeführten Reifen erzielbare Reduktion das Rollwiderstandes signifikant sein kann, je nach dem Anteil des Rillenvolumens. Der Rollwiderstand kann weiter reduziert werden, wenn das Laufstreifen-Bruttovolumen vorzugsweise maximal 8%, bevorzugt maximal 6% beträgt.

Der Gürtelverband weist zumindest zwei aufeinanderliegende Gürtellagen aus in eine Gürtelgummierung eingebetteten, parallel zueinander verlaufenden Festigkeitsträgern auf. Der Gürtelverband dient als Verstärkungsgürtel und weist eine solche Festigkeit auf, damit eine ausreichende Scheitelfestigkeit im Bereich der Umfangsmittellinie gewährleistet ist. Als "Gürtellage" des Gürtelverbandes ist eine gummiverstärkte Schicht bzw. gummierte Verstärkungsschicht zu verstehen, in der eine Vielzahl von voneinander beabstandeten, parallel angeordneten Festigkeitsträgern bzw. Korden eingebettet sind. Ein Festigkeitsträger oder "Kord" ist ein Faden oder -draht, der in die Gummimischung der jeweiligen Gürtellage bzw. Gürtellagenschicht eingebettet ist. Die Korde geben dem Fahrzeugluftreifen Struktur und Stabilität. Eine oder mehrere Gürtellagen können als Arbeitslagen ausgebildet sein. Denkbar ist ferner, dass der Gürtelverband eine Schutzlage, eine Sperrlage und/oder eine 0°-Lage umfasst. Einzelne in radialer Richtung benachbarte Gürtellagen des Gürtelverbandes können aneinander anliegen, also unmittelbar miteinander in Kontakt stehen, oder zueinander beabstandet sein.

Die Karkasse ist vorzugsweise als Radialkarkasse ausgebildet. Der Fahrzeugluftreifen ist dementsprechend ein Radialreifen. Bei Radialreifen verläuft die Karkassenlage, also die Festigkeitsträger der Karkasslage, nahezu senkrecht zur Lauffläche, wobei ihre Orientierung im Winkelbereich größer gleich 75° und kleiner gleich 90° zu einer Umfangsmittellinie liegt. Der radiale Aufbau der Karkassenlage sorgt dafür, dass der Fahrzeugluftreifen flexibler in der Seitenwand ist, was zu einer besseren Bodenanpassung, höherem Fahrkomfort und einer gleichmäßigeren Druckverteilung auf der Aufstandsfläche führt. Denkbar ist, dass die Karkasse mehrere Lagen umfasst. In diesem Fall können die Lagen der Radialkarkasse so angeordnet sein, dass sie sich in entgegengesetzten Orientierungen überlagern bzw. überschneiden bzw. kreuzen, wodurch eine stabile und widerstandsfähige Struktur entsteht.

Denkbar ist, die Karkasse als Diagonalkarkasse auszubilden, so dass der Fahrzeugluftreifen entsprechend ein Diagonalreifen ist. Bei diesen Reifen verlaufen die Gürtellagen in einem schrägen Winkel, meist zwischen 30° und 45°, zur Umfangsmittellinie und überkreuzen sich in den verschiedenen Schichten, weisen insbesondere eine alternierende Orientierung auf. Diagonalreifen sind robuster und widerstandsfähiger gegenüber Beschädigungen durch scharfe Gegenstände, jedoch bieten sie weniger Komfort und eine geringere Anpassung an den Boden im Vergleich zu Radialreifen.

Vor allem die Anzahl und Ausführung der Umfangsrillen und deren Anzahl beeinflusst die Größe des Rillenvolumens. Vorzugsweise weist der Laufstreifen mehrere in Umfangsrichtung verlaufende Umfangsrillen auf, sodass drei oder mehrere voneinander getrennte Umfangsrippen ausgebildet sind. Die Umfangsrillen können gleiche oder unterschiedliche Tiefen aufweisen. Die Umfangsrillen können gleiche oder unterschiedliche Rillenbreiten aufweisen.

Bevorzugt sind die Umfangsrillen über Querrillen und/oder Einschnitte miteinander verbunden. Querrillen und/oder Einschnitte können zwei in axialer Richtung des Fahrzeugluftreifens benachbarte Umfangsrillen miteinander verbinden. Schrägrillen fallen im Rahmen dieser Erfindung ebenfalls unter den Begriff "Querrille". Alle oder ein Teil der Querrillen und/oder Einschnitte münden in wenigstens eine zugehörige Umfangsrille. Das Rillenvolumen ist demnach durch die Summe aus Umfangsrillen sowie Querrillen und/oder Einschnitten definiert.

Nach einem Ausführungsbeispiel erstreckt sich die erste Kautschuklage in radialer Richtung mindestens bis zur radial tiefsten Umfangsrille des Laufstreifens. Der Außenumfang der ersten Kautschuklage ist durch eine parallel zur Laufstreifenperipherie und die erste Einhüllende verlaufende zweite Einhüllende definiert. Die zweite Einhüllende ist radial zwischen der ersten Einhüllenden bzw. dem Außenumfang des Gürtelverbandes und der Laufstreifenperipherie angeordnet. Die zweite Einhüllende bezieht sich auf die radial tiefste Umfangsrille, oder wenn mehrere Umfangsrillen gleich tief ausgebildet sind, auf die radial tiefsten Umfangsrillen. Demnach liegt der Außenumfang der ersten Kautschuklage in radialer Richtung zwischen dem Rillengrund der radial tiefsten Umfangsrille oder den radial tiefsten Umfangsrillen und dem Außenumfang bzw. der Lauffläche des Laufstreifens.

Vorzugsweise erstreckt sich eine parallel zu einer Laufstreifenperipherie des Laufstreifens verlaufende, die erste Kautschuklage von radial außen berührende erste Einhüllende wenigstens bereichsweise radial außerhalb der radial tiefsten Umfangsrille oder den radial tiefsten Umfangsrillen des Laufstreifens. Nach einem Ausführungsbeispiel verläuft die zweite Einhüllende des radial außerhalb des Rillengrundes der radial tiefsten Umfangsrille oder den radial tiefsten Umfangsrillen befindlichen Teils der ersten Kautschuklage in radialer Richtung um mindestens 1,6 mm beabstandet zum Rillengrund. Mithin ist die Außenseite der ersten Kautschuklage in Querschnittsbetrachtung des Fahrzeugluftreifens mindestens 1,6 mm radial außerhalb des Rillengrundes angeordnet.

Die erste Kautschuklage weist in axialer Richtung vorzugsweise unterschiedliche Dicken auf. Insbesondere ist die erste Kautschuklage im Schulterbereich des Laufstreifens dicker ausgebildet als außerhalb des Schulterbereichs bzw. näher zur Umfangsmittellinie. Die erste Kautschuklage weist im Schulterbereich des Laufstreifens bevorzugt eine Dicke von mindestens 4 mm, bevorzugt mindestens 5 mm, ferner bevorzugt mindestens 6 mm, auf.

Bevorzugt beträgt eine Rückprallelastizität der ersten Kautschukmischung, bestimmt bei einer Temperatur von 70°C ± 1°C und einer Temperierzeit von 30 Minuten gemäß **DIN** 53512:2000-04 (Prüfung von Kautschuk und Elastomeren - Bestimmung der Rückprall-Elastizität (Schob-Pendel)), mindestens 65%, vorzugsweise mindestens 68%, ferner bevorzugt mindestens 70%. Ein Prüfkörper zur Bestimmung der Rückprallelastizität wird beispielsweise hergestellt bei einer Vulkanisationstemperatur von 140°C und einer Vulkanisationszeit von 30 Minuten.

Weitere Merkmale, Vorteile und Einzelheiten der Erfindung werden nun anhand der Zeichnungen, die bevorzugte Ausführungsbeispiele der Erfindung zeigen, näher beschrieben, wobei gleiche oder ähnliche Bauteile mit demselben Bezugszeichen versehen sind. Dabei zeigen
- Fig. 1: eine schematische Perspektivdarstellung eines Umfangsabschnitts eines erfindungsgemäßen Fahrzeugluftreifens zur Veranschaulichung des Querschnitts gemäß einer ersten Ausführungsform der Erfindung,
- Fig. 2: eine schematische Perspektivdarstellung eines Umfangsabschnitts des erfindungsgemäßen Fahrzeugluftreifens zur Veranschaulichung des Querschnitts gemäß einer zweiten Ausführungsform der Erfindung,
- Fig. 3: eine schematische Perspektivdarstellung eines Umfangsabschnitts des erfindungsgemäßen Fahrzeugluftreifens zur Veranschaulichung des Querschnitts gemäß einer dritten Ausführungsform der Erfindung, und
- Fig. 4: eine schematische Perspektivdarstellung eines Umfangsabschnitts des erfindungsgemäßen Fahrzeugluftreifens zur Veranschaulichung des Querschnitts gemäß einer vierten Ausführungsform der Erfindung.

Gemäß der Erfindung ausgeführte Fahrzeugluftreifen 1 können als Nutzfahrzeugreifen, insbesondere LKW-, Bus- und Anhängerreifen, ausgebildet sein. Der Fahrzeugluftreifen 1 kann besonders vorteilhaft für Fahrzeuge verwendet werden, die höhere Anforderungen an die Tragfähigkeit und den Rollwiderstand haben.

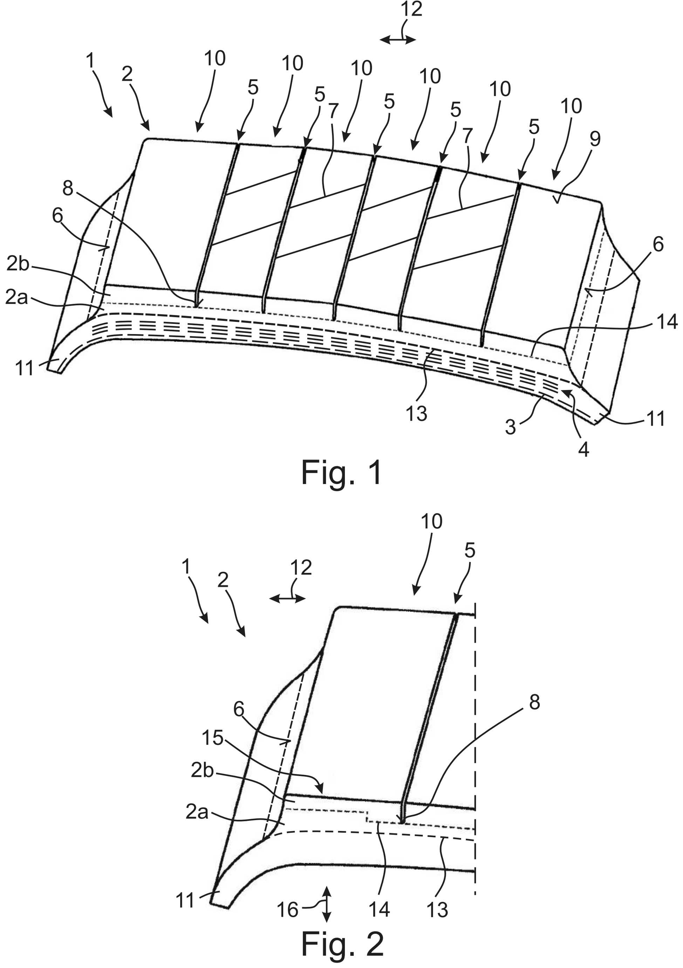

Der Fahrzeugluftreifen 1 umfasst nach Figur 1 einen zweischichtigen Laufstreifen 2, der zwischen zwei Seitenwänden 11 angeordnet ist, deren jeweiliger Ansatz hier lediglich angedeutet ist. Am Laufstreifen 2 sind mehrere, hier lediglich beispielhaft fünf, in Umfangsrichtung des Fahrzeugluftreifens 1 verlaufende, im Wesentlichen identisch ausgebildete Umfangsrillen 5 vorgesehen, die den Laufstreifen 2 in mehrere in axialer Richtung 12 benachbarte Umfangsrippen 10 gliedern. Jeweils zwei Umfangsrippen 10 sind durch eine Umfangsrille 5 voneinander getrennt. Die Anzahl der Umfangsrillen 5 bzw. der Umfangsrippen 10 kann an die Anforderungen des Fahrzeugluftreifens 1 beliebig angepasst werden. Jede Umfangsrille 5 weist einen Rillengrund 8 sowie - hier nicht näher gezeigte - Rillenflanken auf. Die Umfangsrillen 5 weisen hier die gleiche Tiefe und Breite auf. Zwischen den Umfangsrillen 5 können in den Umfangsrippen 10 Querrillen und/oder Einschnitte 7 angeordnet sein, deren Form, Ausrichtung und Geometrie an die Anforderungen des Laufstreifens 2 angepasst werden können.

Der Fahrzeugluftreifen 1 umfasst eine radial innen liegende Karkasse 3 sowie einen radial außerhalb dazu angeordneten Gürtelverband 4 mit mehreren aufeinanderliegenden und/oder in radialer Richtung beabstandet zueinander angeordneten Gürtellagen aus in eine Gürtelgummierung eingebetteten, parallel zueinander verlaufenden - hier nicht gezeigten - Festigkeitsträgern bzw. Korden. Der Gürtelverband 4 kann eine oder mehrere Arbeitslagen, eine Schutzlage, eine 0°-Lage und/oder eine Sperr- oder Blocklage aufweisen, wobei auf den konkreten Aufbau des Gürtelverbandes 4 nachfolgend nicht näher eingegangen wird. Der Gürtelverband 4 ist radial zwischen der Karkasse 3 und dem zweischichtigen Laufstreifen 2 angeordnet.

Eine parallel zur Laufstreifenperipherie 9 im Laufstreifen 2 verlaufende, den Gürtelverband 4 von radial außen berührende erste Einhüllende, hier versinnbildlicht durch eine gestrichelte erste Hilfslinie 13, definiert gemeinsam mit der Laufstreifenperipherie 9 sowie schulterseitigen Flankenabschnitten 6 ein Laufstreifen-Bruttovolumen, welches der Summe des hier befindlichen Gummivolumens und eines Rillenvolumens aller Rillen 5, 7 entspricht. Das Rillenvolumen ist seinerseits die Summe der Luftvolumina sämtlicher Umfangsrillen 5 und Einschnitte 7. Bei einem erfindungsgemäß ausgeführten Reifen beträgt der Anteil des Rillenvolumens am Laufstreifen-Bruttovolumen zwischen 1% und 10%, vorzugsweise maximal 8% und insbesondere zwischen 1% und 6%. Ein erfindungsgemäß ausgeführter Fahrzeugluftreifen 1 weist daher einen Laufstreifen 2 mit einem geringen Rillenvolumen auf.

Der Laufstreifen 2 ist hier in zwei radial übereinander liegende Abschnitte unterteilt, die aus unterschiedlichen Kautschukmischungen bestehen, und zwar eine radial innere erste Kautschuklage 2a als Grundschicht oder Base-Schicht aus einer ersten Kautschukmischung und eine radial äußere zweite Kautschuklage 2b als Cap-Schicht mit einer Lauffläche an der Laufstreifenperipherie 9 aus einer zur ersten Kautschukmischung unterschiedlichen zweiten Kautschukmischung. Die Summe der Gummivolumen der ersten und zweiten Kautschuklage 2a, 2b ist als Laufstreifen-Nettovolumen zu verstehen, wobei das Laufstreifen-Nettovolumen bzw. ein Gesamtvolumen des Laufstreifens 2 dem genannten Laufstreifen-Bruttovolumen abzüglich des genannten Rillenvolumens entspricht. Der Volumenanteil der ersten Kautschuklage 2a beträgt mindestens 20% und höchstens 60%, hier bevorzugt mindestens 30% und höchstens 40%, des Gesamtvolumens des Laufstreifens 2. Die erste Kautschuklage 2a ist damit eine sogenannte "high volume base". Eine Rückprallelastizität der ersten Kautschukmischung der ersten Kautschuklage 2a beträgt, bestimmt bei einer Temperatur von 70°C gemäß DIN 53512:2000-04 mindestens 65%, vorzugsweise mindestens 68%, ferner bevorzugt mindestens 70%.

Zwischen der genannten ersten Einhüllenden an der ersten Hilfslinie 13 und der Laufstreifenperipherie 9 ist eine gestrichelte zweite Hilfslinie 14 dargestellt, die einer zweiten Einhüllenden entspricht, welche ebenfalls parallel zur Laufstreifenperipherie 9 verläuft. Die zweite Hilfslinie 14 definiert die radiale Grenze zwischen den beiden Kautschuklagen 2a, 2b darstellen. Hier ist zu sehen, dass die genannten Rillen, also die Umfangsrillen 5 und die Einschnitte 7, radial außerhalb der ersten Kautschuklage 2a und nur innerhalb der zweiten Kautschuklage 2b angeordnet sind. Die erste Kautschuklage 2a erstreckt sich hier in radialer Richtung bis zur radial tiefsten Umfangsrille 5 des Laufstreifens 2, nämlich bis zum jeweiligen Rillengrund 8 der radial gleich tief ausgebildeten Umfangsrillen 5, so dass die erste Kautschuklage 2a von Rillen unberührt bleibt. Damit kann die erste Kautschukmischung der ersten Kautschuklage 2a ausschließlich für die erforderlichen Eigenschaften der Base-Schicht ausgelegt sein. Insbesondere kann die erste Kautschukmischung hinsichtlich eines optimierten Rollwiderstandes ausgelegt sein. Demgegenüber kann die zweite Kautschukmischung der zweiten Kautschuklage 2b bzw. der Cap-Schicht hinsichtlich Abrieb und Traktion ausgelegt sein. Ein derart ausgebildeter Fahrzeugluftreifen 1 weist einen insgesamt verbesserten Rollwiderstand auf.

Figur 2 zeigt ein weiteres Ausführungsbeispiel des Fahrzeugluftreifens 1. In diesem Ausführungsbeispiel weist die erste Kautschuklage 2a in axialer Richtung 12, also über die Reifenlängsrichtung, eine unterschiedliche Dicke auf. Vorliegend ist die erste Kautschuklage 2a im Schulterbereich 15 deutlich dicker ausgebildet als näher zur Mitte des Laufstreifens 2. Damit wird eine sogenannte Maxi-Wing-Bauweise realisiert. Mithin ist im Schulterbereich 15 wesentlich mehr Material der ersten Kautschukmischung vorhanden als außerhalb des Schulterbereichs 15 bzw. näher zur Umfangsmittellinie des Laufstreifens 2. Die erste Kautschuklage 2a ist im Schulterbereich 15 des Laufstreifens 2 dicker ausgebildet als außerhalb des Schulterbereichs 15.

In dem im Schulterbereich 15 vorgesehenen, dickeren Bereich der ersten Kautschuklage 2a erstreckt sich die die erste Kautschuklage 2a von radial außen berührende zweite Einhüllende, hier dargestellt durch die zweite Hilfslinie 14, radial außerhalb des Rillengrundes 8 der Umfangsrillen 5, und zwar in radialer Richtung 16 um mindestens 1,6 mm beabstandet zum Rillengrund 8, während die zweite Hilfslinie 14 außerhalb des Schulterbereichs 15 fluchtend zum jeweiligen Rillengrund 8 verläuft.

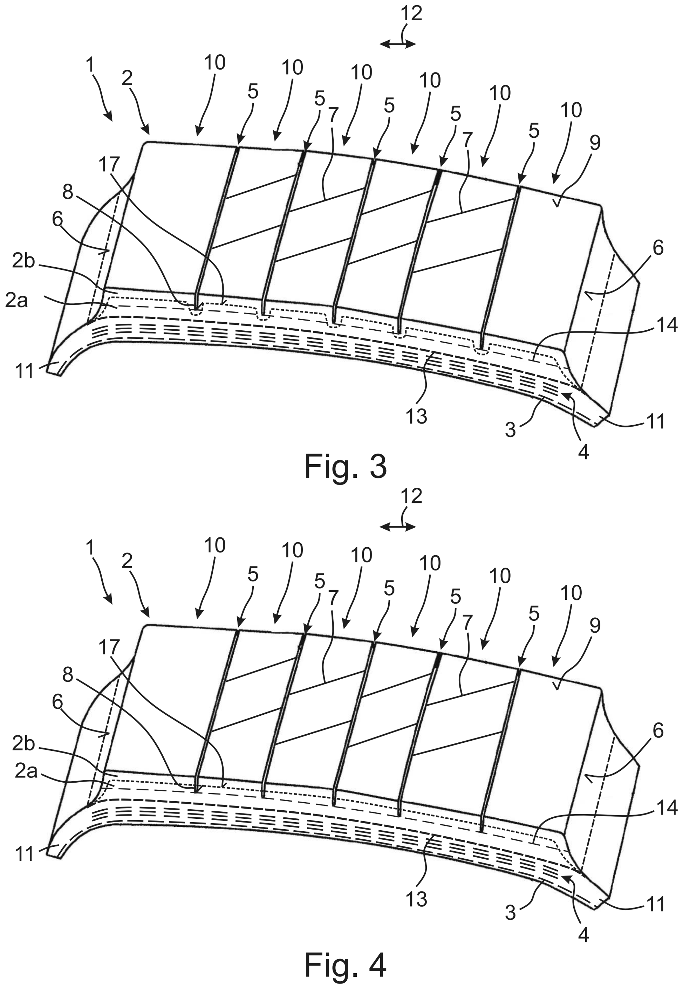

Figur 3 zeigt ein weiteres Ausführungsbeispiel des Fahrzeugluftreifens 1. Hier weist die erste Kautschuklage 2a eine unterschiedliche Dicke auf, wobei der Außenmantel 17 der ersten Kautschuklage 2a innerhalb der Profilbänder bzw. der Umfangsrippen 10 in radialer Richtung mindestens 1,6 mm über bzw. außerhalb der Hilfslinie 14 liegt. Der Rillengrund 8 der jeweiligen Umfangsrille 5 kann dabei von dem Material der zweiten Kautschuklage 2b umgeben sein, wie in Figur 3 dargestellt. Alternativ können die Umfangsrillen 5 mit dem Rillengrund 8 innerhalb der ersten Kautschuklage 2a enden, wie in der vierten Ausführungsvariante nach Figur 4 beispielhaft dargestellt ist. Damit wird das Volumen der ersten Kautschuklage 2a weiter maximiert. Das Kautschukmaterial der ersten Kautschuklage 2a kommt ab einen gewissen Abriebszustand des Fahrzeugluftreifens 1 bzw. des Laufstreifens 2 in Kontakt mit dem befahrenen Untergrund.

### Bezugszeichenliste

- 1: Fahrzeugluftreifen
- 2: Laufstreifen
- 2a: Erste Kautschuklage
- 2b: Zweite Kautschuklage
- 3: Karkasse
- 4: Gürtelverband
- 5: Umfangsrille
- 6: Flankenabschnitt des Laufstreifens
- 7: Einschnitt
- 8: Rillengrund
- 9: Laufstreifenperipherie
- 10: Umfangsrippe
- 11: Seitenwand
- 12: Axiale Richtung
- 13: Erste Hilfslinie
- 14: Zweite Hilfslinie
- 15: Schulterbereich
- 16: Radiale Richtung
- 17: Außenmantel

## Patentansprüche

1. Fahrzeugluftreifen (1) für ein Nutzfahrzeug, umfassend einen Laufstreifen (2) mit wenigstens einer in Umfangsrichtung verlaufenden Umfangsrille (5), die den Laufstreifen (2) in wenigstens zwei Umfangsrippen (10) gliedert, wobei eine parallel zur Laufstreifenperipherie (9) im Laufstreifen (2) verlaufende, einen Gürtelverband (4) von radial außen berührende erste Einhüllende gemeinsam mit der Laufstreifenperipherie (9) sowie schulterseitigen Flankenabschnitten (6) ein Laufstreifen-Bruttovolumen definiert, wobei sämtliche Rillen (5) im Laufstreifen (2) ein Rillenvolumen definieren, wobei das Rillenvolumen im Laufstreifen (2) zwischen 1% und 10% des Laufstreifen-Bruttovolumens beträgt, **dadurch gekennzeichnet, dass** der Laufstreifen (2) mindestens zweischichtig ausgebildet ist, aufweisend eine radial innere erste Kautschuklage (2a) aus einer ersten Kautschukmischung und eine radial äußere zweite Kautschuklage (2b) aus einer zur ersten Kautschukmischung unterschiedlichen zweiten Kautschukmischung, wobei ein Volumen der ersten Kautschuklage (2a) mindestens 20% und höchstens 60% eines Gesamtvolumens des Laufstreifens (2) beträgt.

2. Fahrzeugluftreifen (1) nach Anspruch 1, **dadurch gekennzeichnet, dass** der Laufstreifen (2) mehrere in Umfangsrichtung verlaufende Umfangsrillen (5) aufweist.

3. Fahrzeugluftreifen (1) nach Anspruch 2, **dadurch gekennzeichnet, dass** die Umfangsrillen (5) über Querrillen und/oder Einschnitte (7) miteinander verbunden sind.

4. Fahrzeugluftreifen (1) nach einem der vorhergehenden Ansprüche, **dadurch gekennzeichnet, dass** das Volumen der ersten Kautschuklage (2a) mindestens 25% und höchstens 45%, bevorzugt mindestens 30% und höchstens 40%, des Gesamtvolumens des Laufstreifens (2) beträgt.

5. Fahrzeugluftreifen (1) nach einem der vorhergehenden Ansprüche, **dadurch gekennzeichnet, dass** der Anteil des Rillenvolumens am Laufstreifen-Bruttovolumen höchstens 8% beträgt.

6. Fahrzeugluftreifen (1) nach Anspruch 5, **dadurch gekennzeichnet, dass** der Anteil des Rillenvolumens am Laufstreifen-Bruttovolumen höchstens 6% beträgt.

7. Fahrzeugluftreifen (1) nach einem der vorhergehenden Ansprüche, **dadurch gekennzeichnet, dass** eine parallel zu einer Laufstreifenperipherie (9) des Laufstreifens (2) verlaufende, die erste Kautschuklage (2a) von radial außen berührende Einhüllende wenigstens bereichsweise radial außerhalb eines Rillengrundes (8) der radial tiefsten Umfangsrille (5) oder den radial tiefsten Umfangsrillen (5) erstreckt.

8. Fahrzeugluftreifen (1) nach Anspruch 7, **dadurch gekennzeichnet, dass** die Einhüllende des radial außerhalb des Rillengrundes (8) der radial tiefsten Umfangsrille (5) oder den radial tiefsten Umfangsrillen (5) befindlichen Teils der ersten Kautschuklage (2a) in radialer Richtung um mindestens 1,6 mm beabstandet zum Rillengrund (8) verläuft.

9. Fahrzeugluftreifen (1) nach einem der vorhergehenden Ansprüche, **dadurch gekennzeichnet, dass** eine Rückprallelastizität der ersten Kautschukmischung bei einer Temperatur von 70°C mindestens 65%, vorzugsweise mindestens 68%, ferner bevorzugt 70%, beträgt.

10. Fahrzeugluftreifen (1) nach einem der vorhergehenden Ansprüche, **dadurch gekennzeichnet, dass** die erste Kautschuklage (2a) in axialer Richtung (12) unterschiedliche Dicken aufweist.

11. Fahrzeugluftreifen (1) nach Anspruch 10, **dadurch gekennzeichnet, dass** die erste Kautschuklage (2a) in einem Schulterbereich (15) des Laufstreifens (2) eine Dicke von mindestens 4 mm, vorzugsweise mindestens 5 mm, ferner bevorzugt mindestens 6 mm, aufweist.
